# EUROPEAN PATENT APPLICATION

(11) **EP 4 057 464 A1**
(43) Date of publication of application: **14.09.2022**
(21) Application number: 21204375.6
(22) Date of filing: 25.10.2021
(51) Int. Cl.: H02J 1/08, H01L 31/042, H01L 31/05, H02J 13/00, H02S 20/22

(54) **THE CONNECTING AN ARRAY OF EXTRA LOW DC VOLTAGE SOURCES**

(30) Priority: 12.03.2021 CZ 20210125; 12.04.2021 CZ 20210181
(71) Applicant: Výzkumné a vývojové centrum obnovitelných zdroju a elektromobility s.r.o., 37802 Stráz nad Nezárkou (CZ)
(72) Inventor: Korbel, Viktor, 37802 Strá nad Ne árkou (CZ)
(74) Representative: Sedlák, Jirí

(57) **Abstract**

The invention relates to the connecting an array of an extra low DC electrical voltage sources (1) for forming a power supply having at least a low DC output electrical voltage. The essence of the invention is that interconnections (3) are formed between the sources (1) of extra low DC electrical voltage forming the array to combine extra low electrical voltages into a resulting tabularly larger DC electrical voltage, which are provided with a disconnector (4) for interrupting them in the event of an emergency and breaking up the system again into individual sources (1) of extra low DC electrical voltage.

## Description

The invention relates to the field of power engineering, in particular to the connection of an extra low DC voltage source array, in particular a system installed on a building or on an auxiliary structure located on the building or directly in the building or in an electric vehicle.

### State of the art

In today's society, there is a growing interest in the processing of solar energy, mainly by means of photovoltaic or thermal photovoltaic panels (also "PV") known from document CZ 308 676 B, which are widespread among users in particular because of their versatility for installation on the roofs of houses and other buildings. The use of these panels generally means that the electricity supply to the house or building is primarily supplied from the electricity distribution network using a supplementary or stand-alone local electricity source in the form of a photovoltaic or thermal photovoltaic system. In addition, the trend is to install battery boxes in buildings, so-called 'battery boxes', which store electricity for later consumption.

The individual PV or thermal PV panels are connected in the system in such a way that a lead cable is routed from the voltage/current converter to the first panel in the row, then the lead cable continues sequentially through the individual panels of the row, whereupon the lead cable from the last panel in the row is again routed to the voltage/current converter (the wiring is technically referred to as a string). There can be several strings at the same time in a house or building installation. The string uses a series connection, which allows for the continued conversion of sunlight into electricity and its transmission to the inverter even if one or more of the connected panels is not operational. This means that if there is a fault, for example behind the inverter, there is still a DC electrical voltage in the string which can be dangerous, a known problem with battery, photovoltaic or thermal photovoltaic panel arrays, the essence of which lies in their difficulty in extinguishing fires, since even in the disconnected state of the electrical wiring of the house or building, a life-threatening DC voltage is continuously generated on them.

From the point of view of a house or building fire situation, there is usually a main electrical circuit breaker located on the facade of the building or on the building's property boundary, which can be used to disconnect the house or building from the electrical distribution system and carry out the firefighting without the danger of electrical voltage. However, if there is a system that provides a source of low or high DC electrical voltage, that is connected outside the main circuit breaker, then this presents a problem for firefighting because there is no switch accessible from the outside to safely shut down the system. It means that if a fire occurs and there is no certainty that the system creating a low or high DC voltage can be safely shut down, the fire chief normally does not order a fire suppression action and commands a controlled burn mode for the system and the building it is in. Currently used system wiring arrangements do not allow them to be disconnected from the electrical distribution network or to safely disable the supply branch itself.

The above mentioned fact about not extinguishing in case of doubts comes from the regulation according to the Methodology Sheet No. 41/2017, Chapter P, line 47-48, issued by the Ministry of Interior - General Directorate of the Fire Rescue Service of the Czech Republic and concerning fires of power supply systems.

The same problem exists for batteries that are connected to a common system. One battery alone usually has a safe extra low DC electrical voltage (up to 50 V). However, in battery boxes there are dozens or hundreds of batteries that are connected together in a grid, so that a low or even high DC voltage is present at the output of the battery box. This problem is relevant not only for battery boxes, but also for electric vehicles and their battery systems. If an emergency occurs, firefighters have no other option but to let the battery pack burn out or try to extinguish it by submerging it under the surface of the extinguishing liquid. Any other action is life threatening as dangerous electrical voltage may be present anywhere in the system. In addition, high electrical voltages and electrical currents can lead to unexpected chemical reactions between the battery charges and the extinguishing fluid (electrolysis of water and formation of shaky concentrations of hydrogen and oxygen).

Electrical standards and regulations divide electrical voltages according to magnitude into the following voltage levels: extra low voltage up to 50 V, low voltage from 50 V to 1000 V, high voltage from 1000 V to 52 000 V, etc. The nomenclature given in the text of the application is consistent with this standard division.

It is therefore an object of the invention to provide a connecting an array of extra low DC voltage sources for forming a power supply having at least a low DC output voltage, which eliminates the above-mentioned deficiencies and which, by its design and its characteristics, allows easy and safe disconnection (breakdown) of at least some of the extra low DC voltage sources in a way that no dangerous DC electrical voltages are generated in the system in question and at the outlet of the electrical voltage from the system, which could endanger health, in particular of the intervening firefighting units or the persons carrying out the intervention (service technicians, police or other members of the IRS).

### Essence of the invention

The claimed problem is solved by connecting an array of extra low DC voltage sources to form a power supply having at least a low DC output voltage.

The essence of the invention is that interconnections are formed between the extra low DC voltage sources forming the array to combine extra low electrical DC voltages into larger electrical DC voltages, wherein at least some of the interconnections are provided with a disconnector for interrupting them in the event of an emergency again into individual extra low DC voltages, the disconnectors being connected to each other by a control cable or by wireless communication control means for collective group disconnection

The advantage of the invention is that at the onset of an emergency situation (fault, fire, mechanical damage, etc.) the disconnectors will disconnect the existing interconnections, thereby breaking up the array of sources of extra low DC electrical voltages in terms of electrical voltage merging into individual islands whose current DC electrical voltage is safe, in particular for fire or service intervention.

Preferably, disconnectors are provided for those interconnections whose interconnection already exceeds the standardized extra low DC electrical voltage limit (50 V limit for DC electrical voltage). This is advantageous because it is not necessary to install a disconnector on all interconnections, but only on interconnections that already carry a contribution from multiple sources of extra low DC voltage.

The disconnector is preferably formed by a closing diode or a switching relay. The closing diode must be held open by the supplied opening voltage, otherwise it will not allow the passage of electrical energy through the interconnection, and if an emergency interruption of the supply of opening voltage occurs, the interconnection is automatically interrupted by the closing diode. A switching relay operates in a similar manner, interrupting the power line if the control voltage fails.

Preferably, the disconnectors are connected via a control cable or communicate wirelessly via control means. When the control cable is interrupted or damaged, for example when a fire occurs by over-firing, or when at least part of the roof falls in, or by mechanical breakage in the event of an electric vehicle crash, the shut-off diodes or switching relays find themselves without an opening electrical voltage, thus breaking the connection in the extra low DC voltage source array. If the wireless signal is silenced, the disconnectors will behave in the same manner.

Possibly, the fire chief will cut the control cable, e.g. with telescopic scissors, thereby shutting down all sources in the system for safe firefighting action, or alternatively the fire chief will interfere with the wireless transmission of the circuit breakers of the subject system wiring.

In an advantageous embodiment, the connection according to the invention comprises at least one control unit connected to each of the disconnectors of the sources of extra low DC voltage array via a control cable or via a wireless communication link. The control unit is mounted outside the array, or alternatively in another secure location, and a control cable is introduced into the control unit, or includes a wireless communication transmitter and receiver, whereby it is also possible to disconnect the individual extra low DC voltage sources directly from the control unit, both in the case of a safe shutdown and in the case of diagnostics and servicing of the extra low DC voltage sources in the array.

In a further advantageous embodiment of the connecting according to the present invention, the control unit comprises means for wireless communication with an external electronic device for controlling the control unit. In such a case, for example, the fire chief can disconnect the individual extra low DC voltage sources during a fire outbreak via a safety app from his mobile phone, tablet, computer, control panel, etc. Another advantage is that the reconnection is automatically blocked after disconnection.

It is advantageous that a switch is connected in front of the control unit to receive and distribute the signal between at least two parallel strings of the array of extra low DC voltage sources.The switch is important for controlling and organizing communication between multiple strings consisting of interconnected sources of extremely small DC voltage.

To increase safety, the control unit is autonomously powered by electricity to be independent of the status and operation of the system or the electricity distribution network.

The sources of extra low DC electrical voltage include devices from the battery group, photovoltaic panel, photovoltaic-thermal panel, thermocouple.

Preferably, the disconnectors include means for monitoring physical quantities, in particular electrical physical quantities, temperature, humidity, etc. Monitoring allows for more efficient and safer operation and improves diagnostic capabilities.

Last but not least, it increases safety if the disconnector is provided with a means of blocking reconnection. Reclosing the interconnection must be done by a certified technician so that it is impossible for the interconnection to reclose in an emergency, thereby endangering health and property.

An advantage of the connecting according to the present invention is that in the event of an emergency, the entire array of extra low DC power sources can be shut down and it is not necessary to have the entire building or electric vehicle burned down in a controlled manner with respect to the safety of people and property. A further advantage is that it is possible to use a control unit connection for remote disconnection, or for diagnosis and servicing of individual extra low DC power supplies or the whole system of extra low DC power supplies. Other advantages are increased safety, as it is a hardware (physical) solution, so there is no risk of software failure, either by error or by third party intervention, and it is also advantageous that in the event of a dangerous situation, it is possible to disable the electric power supply to the electric vehicle, thus avoiding the threat of a chase or attack against persons, or preventing the electric vehicle from entering a restricted zone.

### Clarification of drawings

The presented invention will be explained in more detail in the following illustrations, where:
- Figure. 1: shows a schematic illustration of the connecting of an array of three extra low DC photovoltaic power sources according to the invention with cable connection of the disconnectors,
- Figure 2: shows a schematic representation of the connecting of an array of three extra low DC photovoltaic power sources according to the invention with wireless connection of the disconnectors,
- Figure 3: shows a schematic illustration of the connecting of a battery pack array to form a power supply with a low DC output voltage,
- Figure 4: shows a schematic illustration of the connecting of two parallel strings through switch to control unit.

### Examples of embodiments of the invention

It is understood that the specific examples of embodiments of the invention described and illustrated below are presented for illustrative purposes and not as a limitation of the invention to the examples provided. Those skilled in the art will be able to find or be able to provide, using routine experimentation, a greater or lesser number of equivalents to the specific embodiments of the invention described herein.

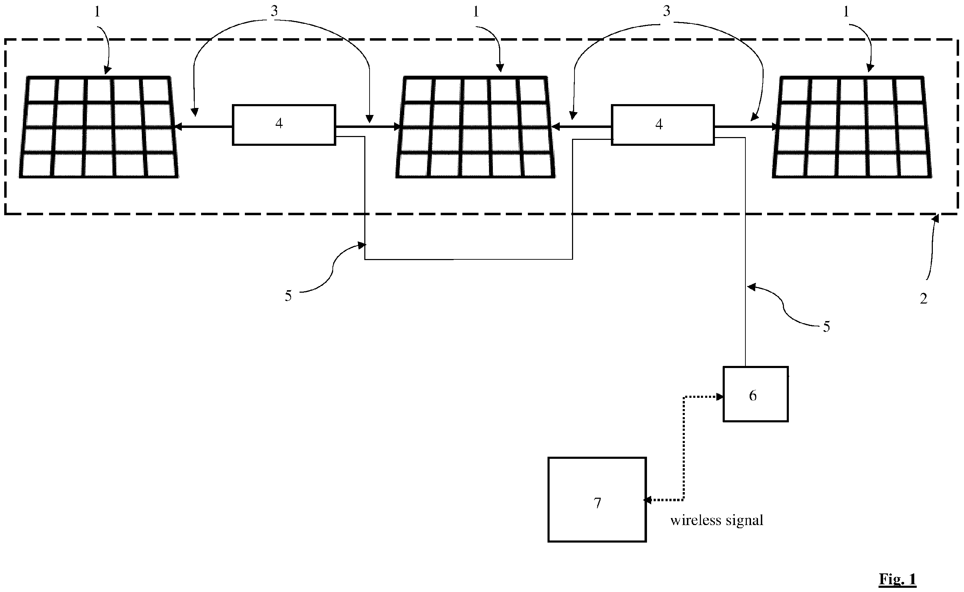

Figure 1 illustrates the circuitry of an array of three sources 1 of extra low DC electrical voltages up to 50 V, which for example are photovoltaic panels that are commonly installed on the roofs of buildings. Together, the array forms a power supply 2 of low output DC voltage between 50 V and 1000 V. Between the individual extra low DC output voltage sources 1 are cable electrical interconnections 3. Each interconnection 3 is provided with a disconnector 4 which is ready to interrupt the interconnection 3 in the event of an emergency situation so that the extra low DC output voltages cannot merge into larger DC output voltages from 50 V upwards which are life and property threatening. As can be seen from Figure 1 below, the disconnectors 4 are connected by a control cable 5 which is led to the control unit 6. The control unit 6 communicates by radio with an external electronic device 7. The disconnector 4 comprises a controlled closing diode to which an opening electrical voltage is continuously applied. A person skilled in the art may replace the closing diode with an alternative electronic component that can interrupt the interconnection 3 in the event of receipt of an instruction/signal failure, such as a switching relay. The control cable 5 may be represented by any electrical conductor, but a data LAN cable with a connector marked RJ 45 has proven to be the most advantageous as it greatly simplifies installation and service. The closing diode draws the opening electrical voltage through the control cable 5 and closes in the event of a break in the control cable 5, thereby breaking the interconnection 3. The control unit 6 is any electronic device capable of controlling the disconnectors 4, collecting operating values from the system, sending operating information about the system, evaluating the operating status of the system, receiving instructions, and executing the actions in question according to the instructions. The control unit 6 is provided with a means for wireless radio communication with an external electronic device 7, which may be a mobile phone, a tablet, a fire department switchboard, or a remote computer. The radio connection is made via mobile phone, Wi-Fi or Bluetooth. The control unit 6 may also be controlled by a mobile application or a computer program. In the event of a fire, the fire chief can switch off individual sources 1 of extra low DC voltage or the entire system via an app on his mobile phone or tablet, or via a program on a computer.

The control unit 6 is an optional component within the scope of the invention. From the point of view of health and property protection, the invention operates in a basic variant of chain communication of individual disconnectors 4. In particular, the control unit 6 extends the range of functions and user access/control.

In the next other example embodiments, the disconnector 4 may comprise an electronic assembly of components on a printed circuit board. Those skilled in the art of electrical engineering will be able to prepare a variety of solution designs that accomplish the same task. They will also be able to use other control cables 5 which are easily burned out or can be mechanically interrupted, and which can transmit a mutual feedback signal to keep the disconnector 4 in the inactive position.

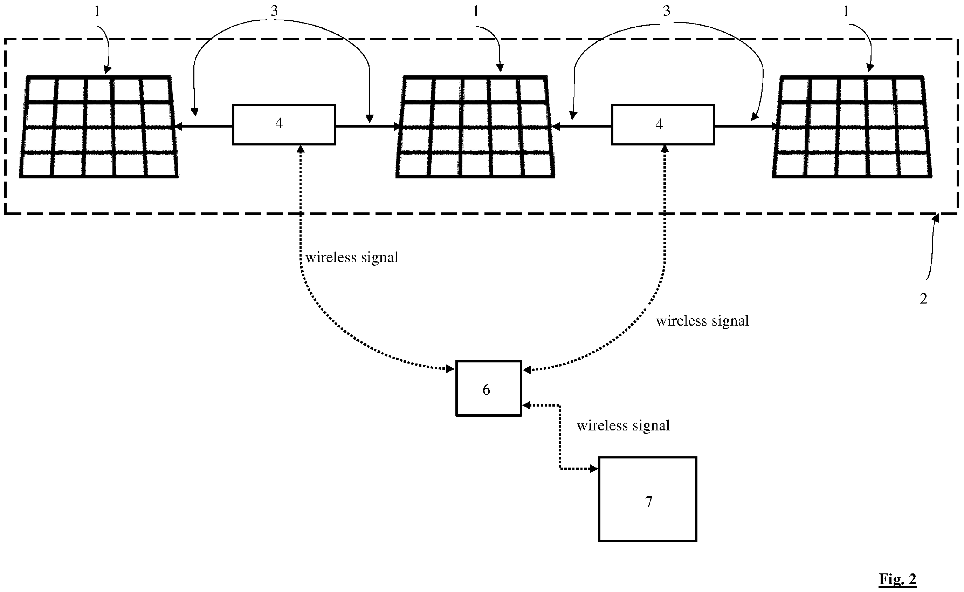

Figure 2 shows a diagram similar to the embodiment of the invention of Figure 1, with the difference that the control cable 5 is not used, but the disconnectors 4 communicate with the control unit 6 via a wireless communication link. The control signal may be implemented as Wi-Fi, Bluetooth, via a mobile communication operator's network, etc. The skilled person will be able to suggest other alternatives performing the same task.

Although wireless communication is feasible and its use seems feasible to the average expert at first sight, wireless communication is not recommended in terms of practice and research because of low reliability, especially in terms of signals interference, and because of the low capacity of data packet transmission. Therefore, the main focus of the invention is on a cable 5 which is maximally reliable according to tests and which can transmit even larger data packets when needed. Based on practical results, the inventors do not exclude wireless communication from use, but do not recommend it. If the skilled artisan finds an application involving the coupling of DC electrical voltage sources to higher DC electrical voltage sources where the increased risk is acceptable, the invention is applicable in such an application.

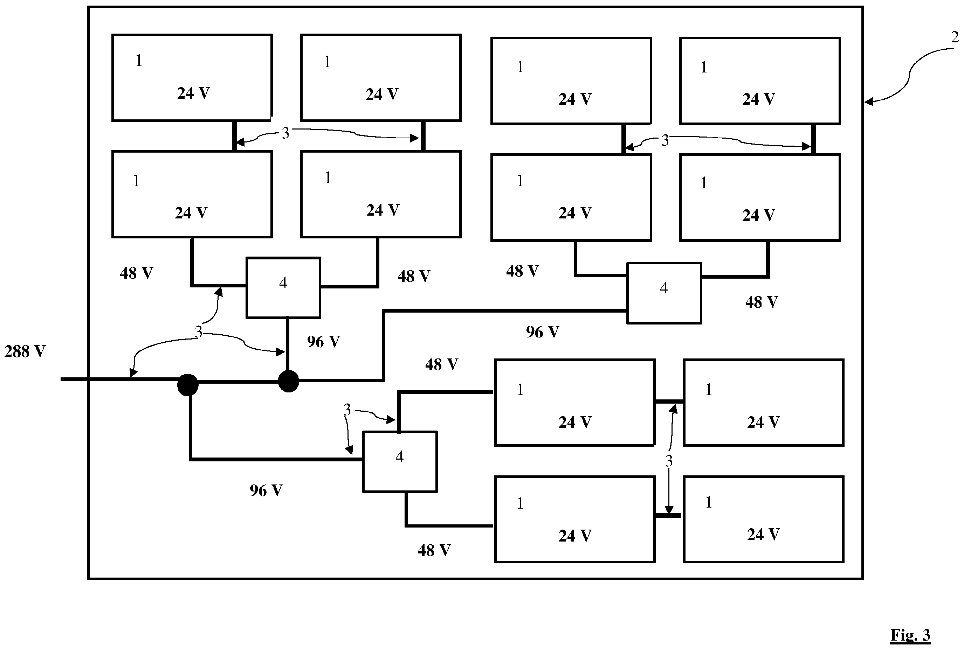

Figure 3 shows a circuit diagram of the array in a battery box, which forms a power supply 2 with a low/high output DC electrical voltage. As can be seen from Fig. 3, the low DC voltage sources 1 are formed by batteries having an electrical voltage of 24 V. These batteries are combined by interconnections 3 to a common output of 48 V, which is still considered extra low and therefore safe according to the tables. The extra low electrical voltages are then merged to 96 V and 288 V respectively by connection 3. Connections 3, where the electrical voltage rises above the safe value of 50 V, are equipped with disconnectors 4. As can therefore be seen from the figure, not all interconnections have to be provided with a circuit breaker 4 in the system wiring.

The schematic in Figure 3 is an illustration for both battery plants and electric vehicles, which also include a battery pack system coupled into larger voltage-power units.

In the connecting of the array of extra low DC voltage sources 1 to form a power supply 2 with at least a low DC output voltage, the basic assumption is that once a link at one of the disconnectors 4 is broken - control cable broken / wireless signal failure - the disconnectors 4 will deactivate the extra low DC voltage sources 1 in the circuitry. That is, for example, as soon as the control cable 5 is interrupted or damaged, e.g. when a fire occurs or at least a part of the roof collapses, the closing diodes of the circuit breakers 4 are de-energized, thereby closing, thereby deactivating the photovoltaic or photovoltaic-thermal panels.

If the electrical voltage, current, temperature, or humidity in the circuit breakers 4 are monitored by monitoring means, the safety of operation is increased. Moisture is the cause of short circuits, and variations in electrical voltage and current can detect the failure of the source 1 in time.

At the same time, the disconnector 4 may comprise a semiconductor component that automatically locks the disconnector 4 when the connection 3 is broken by the disconnector 4, thereby preventing the reconnection of the connection 3.

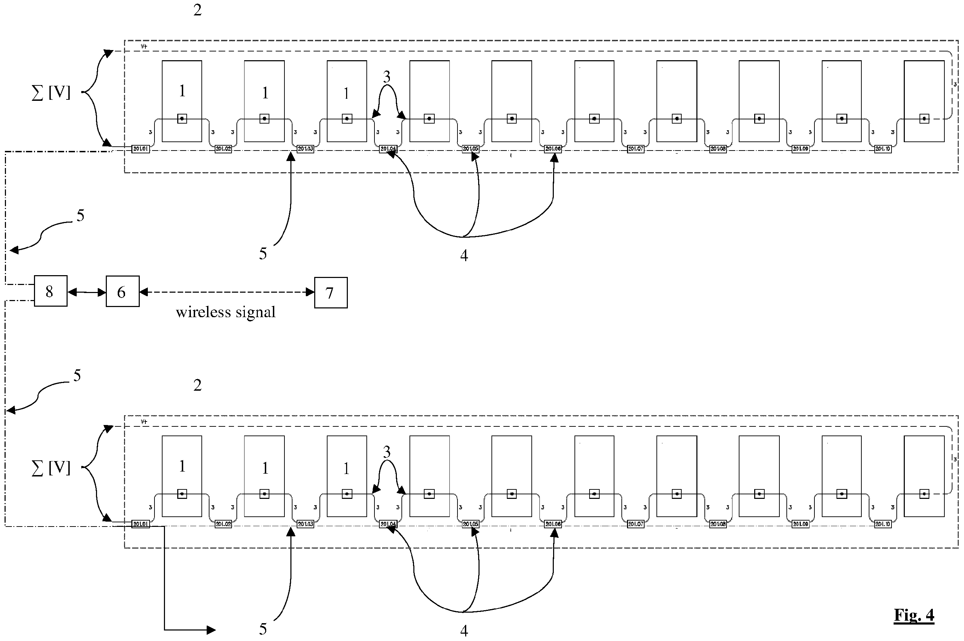

Figure 4 shows the connection of two parallel strings of extremely small DC voltage sources 1 to a small DC voltage source 2. To prevent communication errors between the disconnectors 4, the communication traffic is controlled by a switch 8, which connects the control unit 6 to the control cable 5.

Practical tests have shown that the invention can operate without an autonomous power supply to keep the components of the invention running independently of the current state of the controlled small DC voltage source 2, or any of its extra low DC voltage sources 1.

On the other hand, development has shown that this is not a sufficiently reliable solution if the invention is to serve as a means of improving safety. The loss of power leads to a loss of operating data in control unit 6, making it difficult to react to a crisis situation, or the operator is essentially blind. If a stand-alone power source is used, the operator can search the data in control unit 6 for the source of the problem and better target countermeasures.

### Industrial applicability

The connecting an array of extra low DC voltage sources to form a power supply having at least a low DC output voltage according to the invention finds application in the installation and manufacture of systems which must comply with fire and safety regulations.

### List of related marks

- 1: extra low DC voltage source
- 2: power supply having at least a low DC output voltage
- 3: interconnection
- 4: disconnector
- 5: control cable
- 6: control unit
- 7: external electronic device
- 8: switch

## Claims

1. A connecting an array of extra low DC voltage sources (1) to form a power supply (2) with at least a low DC output voltage, wherein interconnections (3) are formed between the extra low DC voltage sources (1) forming the array to combine extra low electrical voltages, **characterized in that,** at least some of the interconnections (3) being provided with a disconnector (4) for interrupting the interconnections (3) and breaking up the array again into individual extra low DC voltages in the event of an emergency, the disconnectors (4) being connected to each other by a control cable (5) or by wireless communication control means for collective group disconnection.

2. The connecting an array according to claim 1, **characterized in that** the disconnector (4) is provided with interconnections (3) whose contributions to the sum of the electrical voltages result in exceeding the extra low voltage limit.

3. The connecting an array of claim 1 or 2, **characterized in that** the disconnector (4) comprises a closing diode or a switching relay.

4. The connecting an array according to any one of claims 1 to 3, **characterized in that** it comprises at least one control unit (6) connected to each of the disconnectors (4).

5. The connecting an array according to claim 4, **characterized in that** the control unit (6) comprises means for wirelessly communicating with an external electronic device (7) for controlling the control unit (6), wherein the external electronic device (7) is selected from the group consisting of, a tablet, a smartphone, a laptop, a fire department switchboard, a computer.

6. The connecting an array according to claim 4 or 5, **characterized in that** a switch (8) is connected in front of the control unit (6) to receive and distribute the signal between at least two parallel strings of the array of extra low DC voltage sources (1).

7. The connecting an array according to claim 4 to 6, **characterized in that** the control unit (6) and switch (8) are powered by an autonomous electrical power source of extra low DC electrical voltage.

8. The connecting an array according to any one of claims 1 to 7, **characterized in that** the extra low DC electrical voltage power source (1) comprises a device from the group consisting of a battery, a photovoltaic panel, a thermal-photovoltaic panel, a thermocouple.

9. The connecting an array according to any one of claims 1 to 8, **characterized in that** the disconnector (4) comprises at least one means for monitoring physical quantities.

10. Wiring according to any one of claims 1 to 9, **characterized in that** the disconnector (4) comprises a means for automatically blocking the reconnection of the interconnection (3).
